# EUROPEAN PATENT APPLICATION

(11) **EP 4 703 119 A2**
(43) Date of publication of application: **04.03.2026**
(21) Application number: 25198819.2
(22) Date of filing: 28.08.2025
(51) Int. Cl.: B29C 45/16, B29C 33/00, B29K 75/00

(54) **PUR OVERMOLDING TOOL SEAL OFF TO INJECTION MOLDED ARTICLE**

(30) Priority: 28.08.2024 US 202463688062 P
(71) Applicant: Magna Exteriors Inc., Aurora ON L4G 7K1 (CA)
(72) Inventor: Salzmann, Heiner, Metamora, Michigan 48455 (US); Tichy, Stanislav, Troy, Michigan 48085 (US); Maclean, Peter V., Clinton Township, Michigan 48038 (US); Hess, Mark, Gaines, Michigan 48436 (US); Chaaya, Riad, Clarkston, Michigan 48348 (US); Walia, Parvinder S., Shelby Township, Michigan 48315 (US); Blascik, Marek, Southfield, Michigan 48076 (US)
(74) Representative: Witte, Weller & Partner Patentanwälte mbB

(57) **Abstract**

A process for edge sealing during an overmolding of a polyurethane on a substrate part comprising the steps of:
A. Providing an injection mold cavity including a first side platen forming mold (11a) and a second side mating part forming platen (14);
B. Molding a substrate part (22) formed between the first side platen (11) and the second side mating part forming platen (14);
C. Providing a second overmold cavity for overmolding a polyurethane or other covering (20) over the substrate part; and
D. Providing a seal (12) at the flashing edge (18) of the second overmold cavity and overmolding the polyurethane or other covering over the substrate part such that there is substantially no flashing material where the seal is located.

## Description

### CROSS-REFERENCE TO RELATED APPLICATIONS

This application is a Non-Provisional Patent Application, and claims benefit of United States Provisional Patent Application No. 63/688,062, filed August 28, 2024. The disclosure of the above application is incorporated herein by reference.

### FIELD OF THE INVENTION

The present invention relates to a PUR overmolding tool seal for an injection molded article.

### BACKGROUND OF THE INVENTION

Overmolding injection molded parts with PUR with the puroclear or similar systems requires an overflow of the PUR material at the edge of the part and a trimming operation. Need for bare substrate to seal of PUR cavity.

It is a goal in this area of manufacture to reduce PUR material scrap, reduce trimming labor, improve part trim line optics, capability to create a clear distinction line on the molded part.

Tool steel to part seal off creates flash conditions. Overflow cavities require trimming operation and exposure of trim cut to the environment. Both of these are undesirable in vehicle manufacturing and finish.

The sealing is an insert in the molding tool. Depending on the location of the required seal, the seal is placed on a sliding element in the tool. The material of the sealing is selected in a way that it does not stick to the PUR material it is adjustable in shore hardness to accommodate the needs of different molding materials and seal off conditions is moldable in different shapes and with support and connection/location inserts is of low cost so the seal can be replaced due to wear from production, can be easily cleaned from PUR contaminations, is easily replaceable during tool maintenance.

The seal can be in a fixed position in the PUR overmolding tool, sliding in a fixed position after the injection molding process, or placed on an adjustable pneumatic slider to adjust the contact pressure in a way that there is enough seal off for the process without pushing the molded article out of the core position.

The drawings show the different types of use in a molding tool fixed position on a slider with fixed end position, position on a variable pressure slider.

The most important features of the invention are the adjustable shore hardness, inertia to PUR adhesion, easy moldability in multiple shapes.

The recommended material is a silicone resin that provides the above-mentioned features molded to the required shape and inserted during the molding process with reusable metal inserts to support the sealing function and provide attachment features to the molding tool.

At the end of life of the sealing, the metal inserts will be separated from the silicone and reused in the new sealing.

### SUMMARY OF THE INVENTION

A process for edge sealing during an overmolding of a polyurethane on a substrate part comprising the steps of:
A. Providing an injection mold cavity including a first side platen forming mold and a second side mating part forming platen;
B. Molding a substrate part formed between the first side platen and the second side mating part forming platen;
C. Providing a second overmold cavity for overmolding a polyurethane or other covering over the substrate part; and
D. Providing a seal at the flashing edge of the second overmold cavity and overmolding the polyurethane or other covering over the substrate part such that there is substantially no flashing material where the seal is located.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figures 1A (1) - 1B are sectional views illustrating a first embodiment of the present invention;
Figures 2A - 2C (2) are sectional views illustrating another embodiment of the present invention;
Figures 3A and 3B are sectional views illustrating another embodiment of the present invention;
Figures 4A - 4C are sectional views illustrating another embodiment of the present invention;
Figures 5 and 5A are sectional views illustrating another embodiment of the present invention;
Figures 6 - 6E are sectional views illustrating another embodiment of the present invention;
Figures 7A - 7F are sectional views illustrating another embodiment of the present invention; and,
Figures 8A - 8F are sectional views illustrating another embodiment of the present invention.

### DETAILED DESCRIPTION OF THE PREFERRED EMBODIMENTS

The following description of the preferred embodiment(s) is merely exemplary in nature and is in no way intended to limit the invention, its application, or uses.

A process for edge sealing during an overmolding of a polyurethane on a substrate part comprising the steps of:
A. Providing an injection mold cavity including a first side platen forming mold 11a and a second side mating part forming platen 14;
B. Molding a substrate part 22 formed between the first side platen 11 and the second side mating part forming platen 14;
C. Providing a second upper platen 11b which creates an overmold cavity for overmolding a polyurethane or other covering 20 over the substrate part; and
D. Providing a seal 12 at the flashing edge 18 of the second overmold cavity and overmolding the polyurethane or other covering over the substrate part such that there is substantially no flashing material where the seal is located.

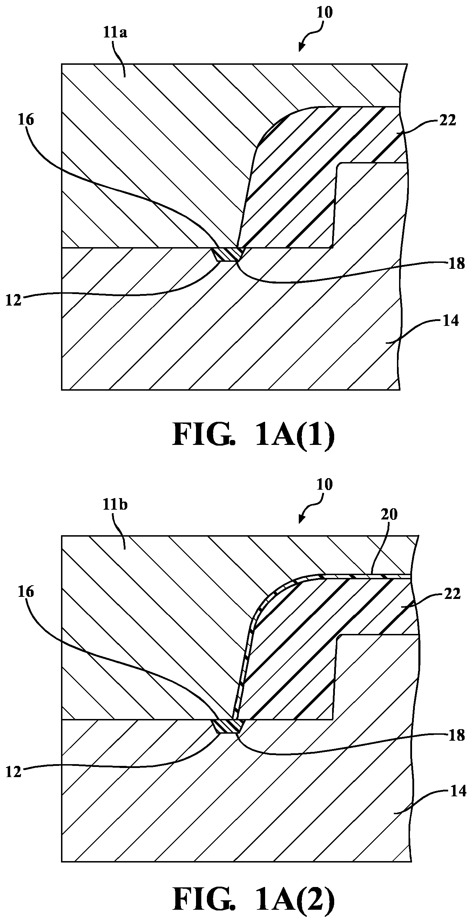

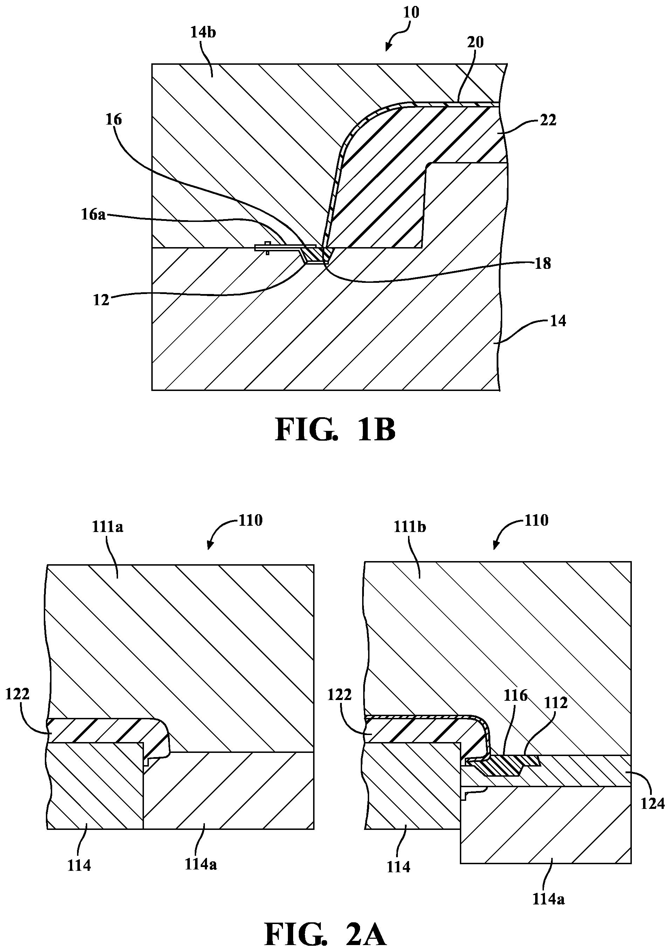

In a first embodiment of the process 10, shown in Figure 1A (1) a seal 12 is embedded or attached to the lower platen 14. The seal 12 is installed by molding it in a cavity 16 in the tool at the flashing line 18 where the polyurethane coating meets the mold when overmolding of the polyurethane 20 onto the substrate part 22. The upper platen 14a is pulled back or replaced with a separate platen 14b for providing the overmold cavity for the PUR polyurethane material.

Seal 12 is typically a silicone material. In some cases, the seal may include a metal stiffener 16a or carrier member for providing support for the seal. The seal is designed to be compressible for sealing the edge area of the PUR molding layer. Typically, the seal is continuous to cover any areas where flashing of the PUR material is undesired. Depending on the application, the seal 12 can also be multiple segments inserted into the common core cavity where flashing is to be prevented. The seal 12 must be temperature resistant and also is designed to release cleanly from the PUR layer after molding. Thus, a silicone material is typically used for meeting this criteria. However, a PTFE coated seal or the like with or without release agents may also be used.

Referring to Figures 2A - 2C (2) there is shown an alternate embodiment wherein like numbers differing by 100 refer to like elements. In this embodiment a core compression ring 114a is provided for mating to the lower platen 114 to form the lower molding platen. After the substrate part 122 is molded a slider 124 is put in place for the overmolding of the polyurethane 120 onto the part 122. The slider includes a seal cavity 116 in which the seal 112 is contained. In this way, the seal 112 prevents any flashing when overmolding of the polyurethane layer.

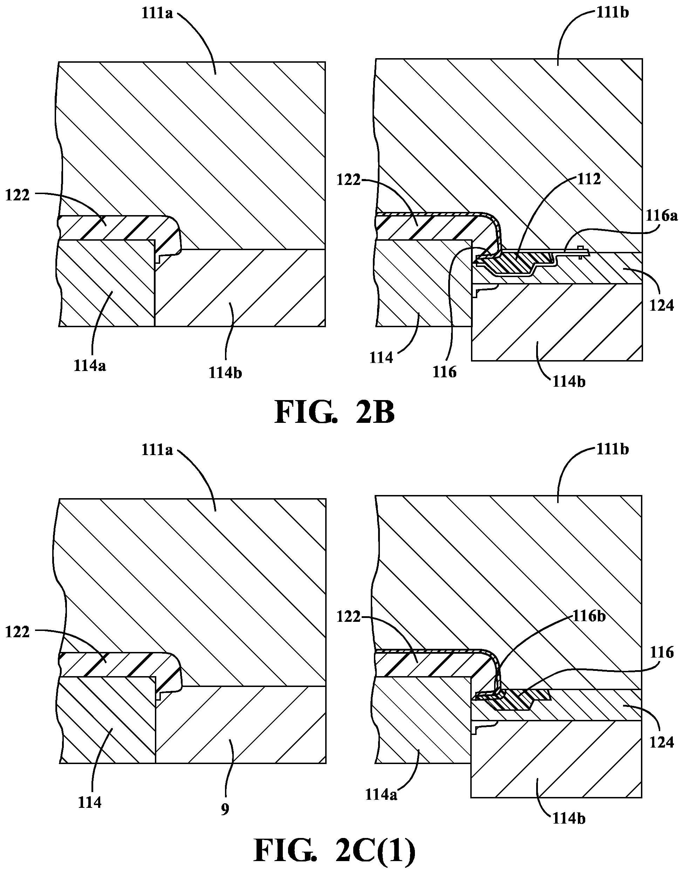

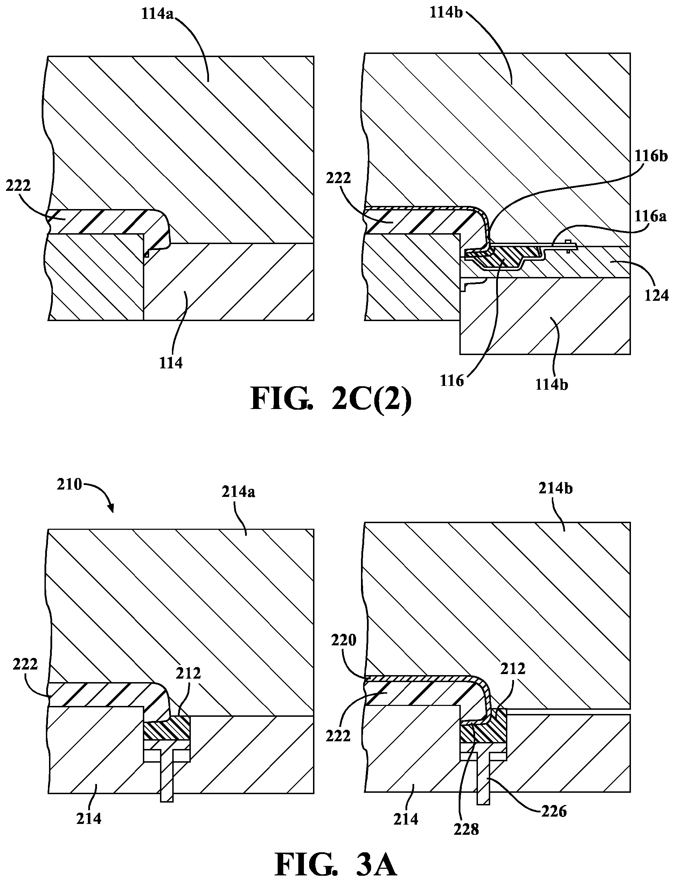

Figures 2B, 2C (1) and 2C (2) show variations on this method. Figure 2B shows the use of a seal bracket 116a for reinforcing the seal shape during molding of the PUR layer. In Figure 2C (1) a separate higher durometer 2K silicon seal layer 116b is provided on the seal to provide a more consistently formed rounded edge on the part edge. In Figure 2C (2) a shape holding seal bracket member 116a is provided to help maintain the shape of the seals 116 and 116b for molding of the final PUR rounded edge.

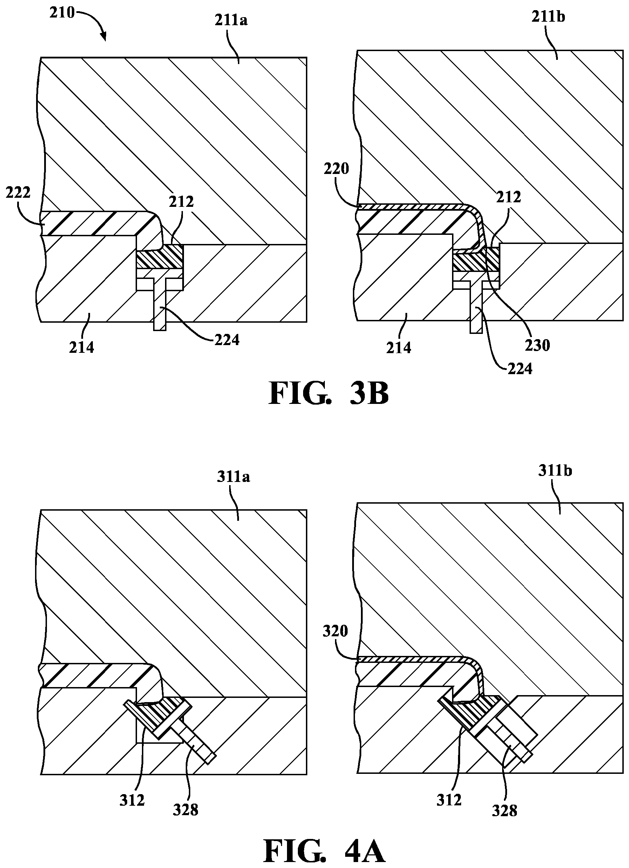

Referring now to Figures 3A and 3B, wherein like numbers differing by 100 refer to like elements, the lower platen 214 includes a seal 212 raising hydraulic cylinder 224 which raises the seal 212 into place at the flashing area 218 to reduce flashing in the substrate area and therein the cylinder 224 is lowered to produce a cavity 228 for providing an edge following and flowing under PUR finished surface during overmolding of the PUR material 220. Figure 3B shows the same concept for producing a pointed flush edge portion 230 final PUR end termination.

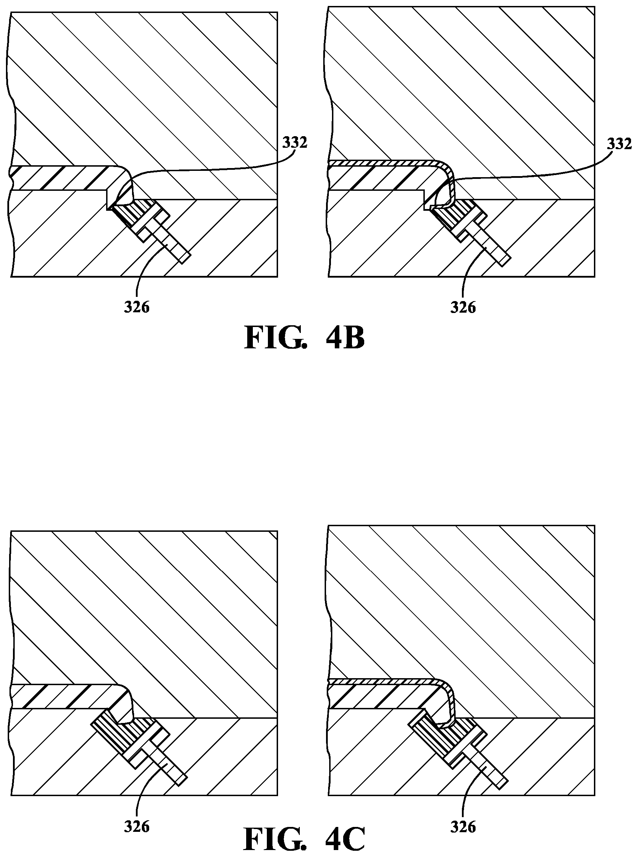

Figures 4A through 4C, wherein like numbers differing by 100 refer to like elements, are similar to the embodiments shown in Figures 3A and 3B. Except the hydraulic cylinder 224 for raising the seal 312 is angled at 45 degrees for accommodating a seal 312 which can provide radiused corners to the PUR overmolded part 320. In Figure 4A this allows for a cavity which creates a PUR layer which surrounds the edge of the substrate. In Figure 4B this allows for a PUR layer which goes around the lower edge of the substrate and terminates at the downward extending edge 332 of the substrate. In Figure 4B and in Figure 4C, an outwardly slanted edge of the substrate is rounded with PUR by way of dropping the hydraulic slider containing the seal downward and outward along the 45 degree angle.

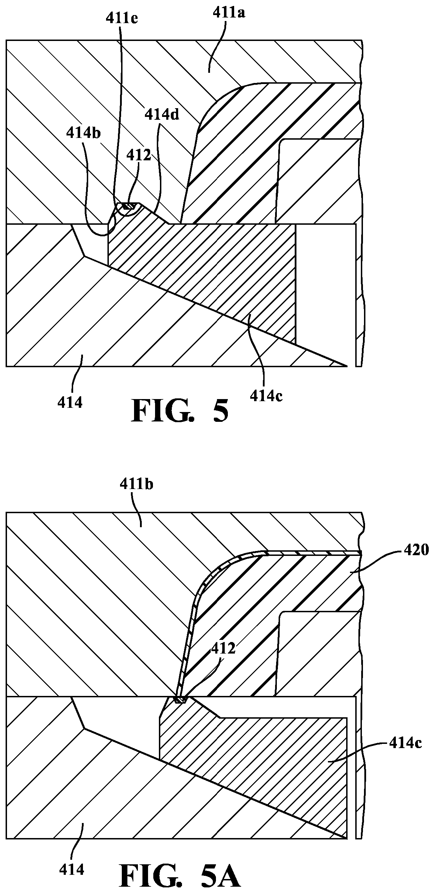

Referring now to Figures 5 - 5A wherein like numbers differing by 100 refer to like elements, the lower platen 414 includes a sliding member 414c which has a seal 412 attached to an extending end 414d which fits in a first cavity 414c when molding the substrate part 422 (as shown in Figure 5) and slides down for positioning the seal 412 for overmolding the PUR layer 420.

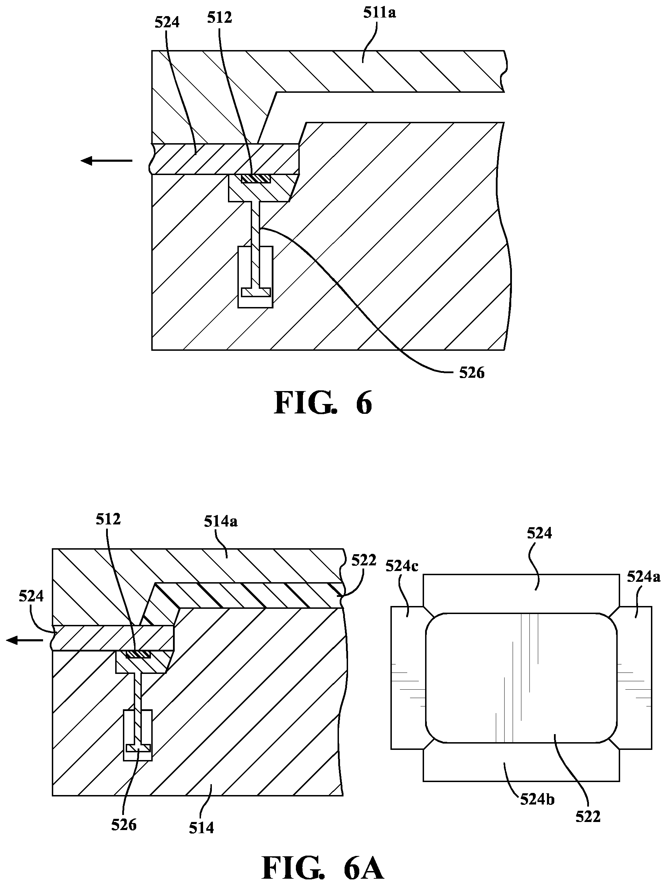

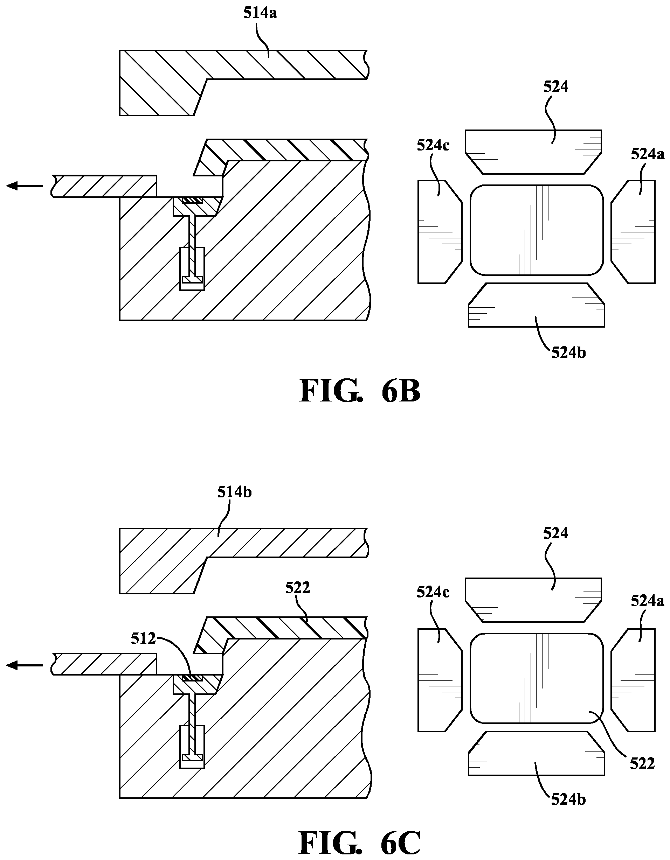

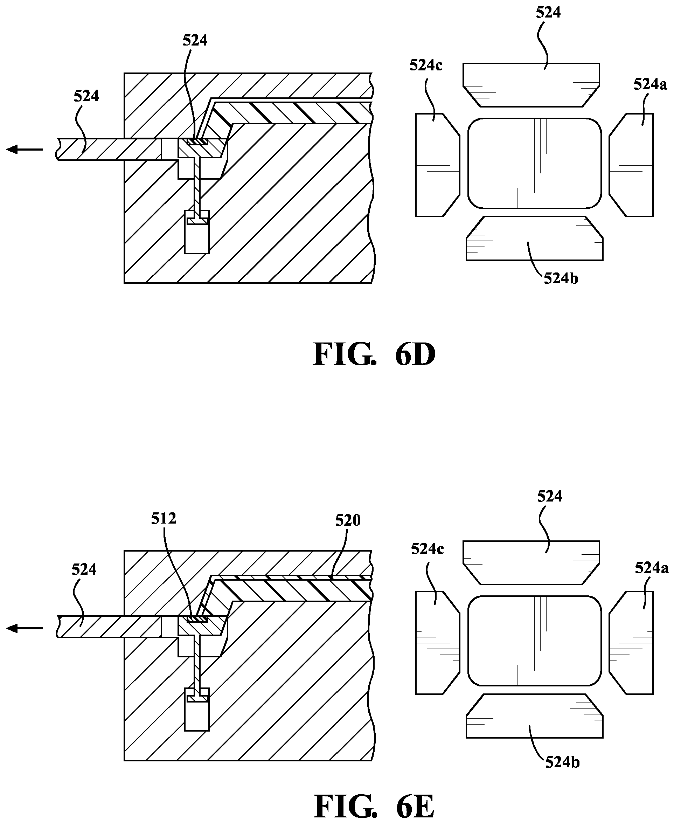

Referring now Figures 6 - 6E, wherein like numbers differing by 100 refer to like elements, a core slider 524 is provided which blocks the hydraulic cylinder 526 which raises the seal 520 during molding of the substrate part 522 when the PUR platen 514b is moved into place for overmolding of the PUR layer, the core slider 524 is moved out of the way and the hydraulic or pneumatic cylinder 526 moves the seal 520 into position for allowing overmolding of the PUR layer without any extra flashing at the mold line. In this embodiment a slider (524, 524a, 524b, 524c) and seal is provided at each side of the part as required to provide an entire outer peripheral seal on the part when molding the final PUR layer. Typically, these sliders will nest together as shown to provide an entire outer peripheral seal where required. Typically, at least two of such sliders are used in molding of parts of the present invention.

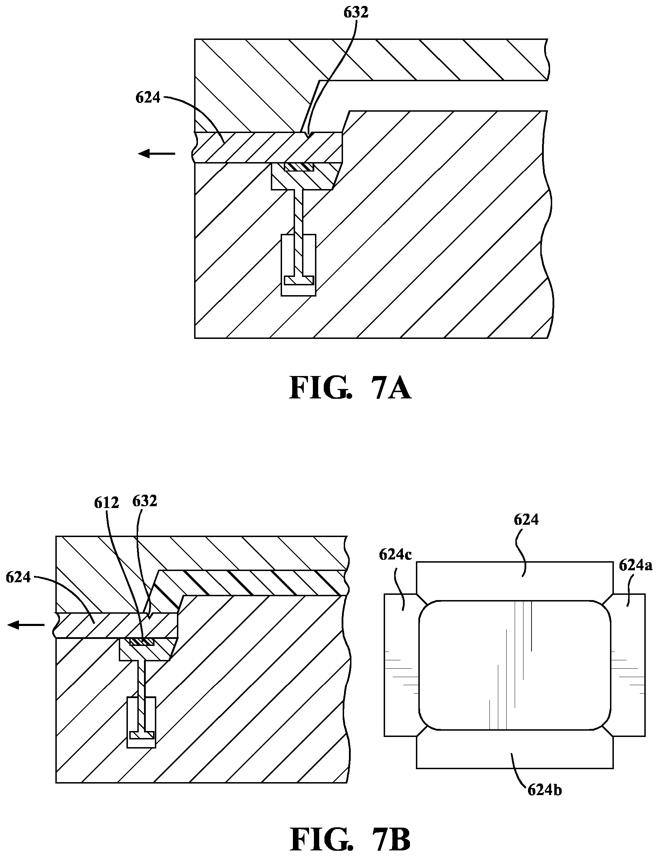

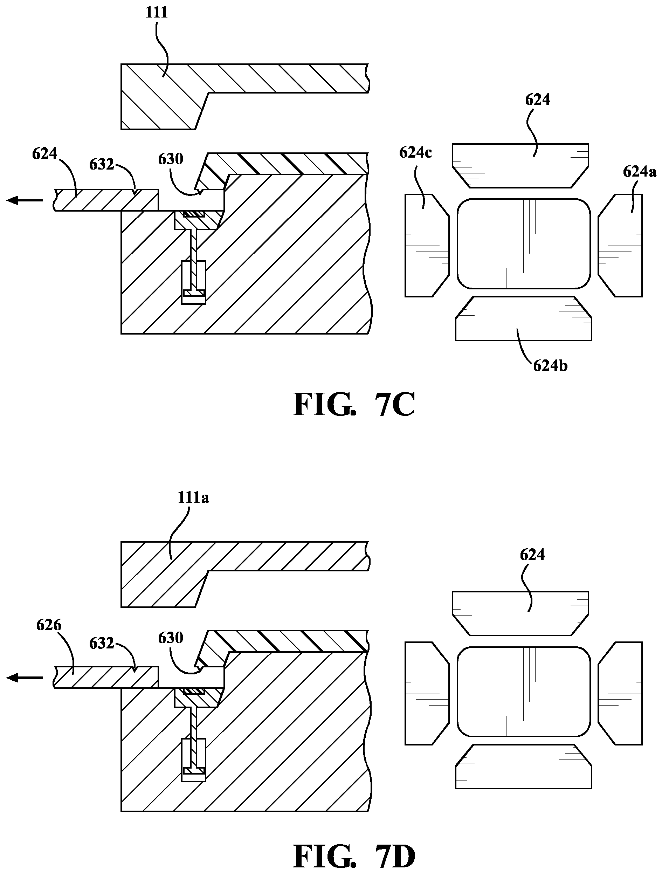

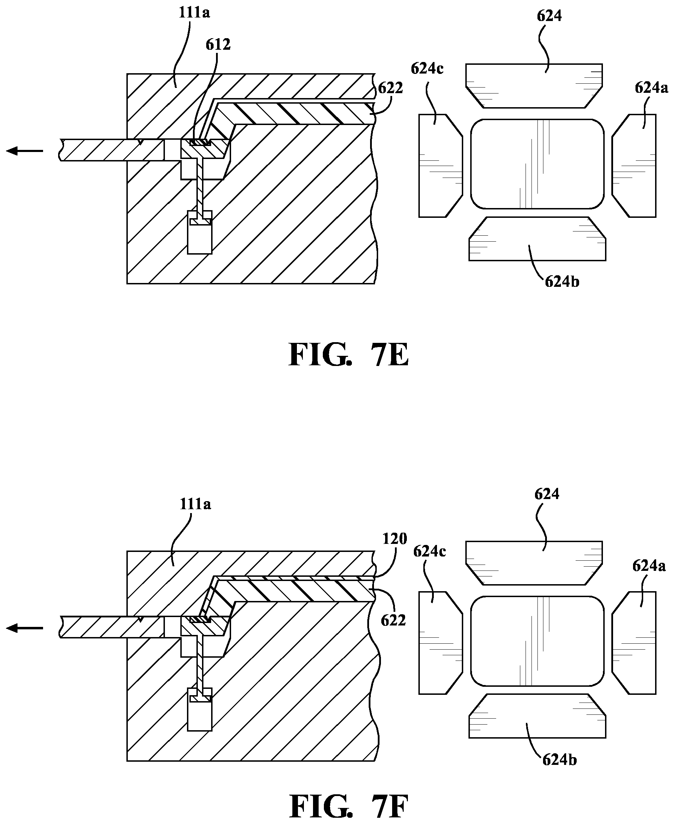

Referring now to the drawings Figures 7A - 7F, wherein like numbers differing by 100 refer to like elements. On #7 there is an additional rib 630 which is formed by a depression 632 in the core slider 624. The additional rib extends downward from the substrate part 622 to create more of a "point contact" with the seal rather than the large surface area shown on Figures 6 - 6E where this is desired. Typically, the rib 630 is provided around the entire periphery of the part where the overmolding of the PUR layer takes place.

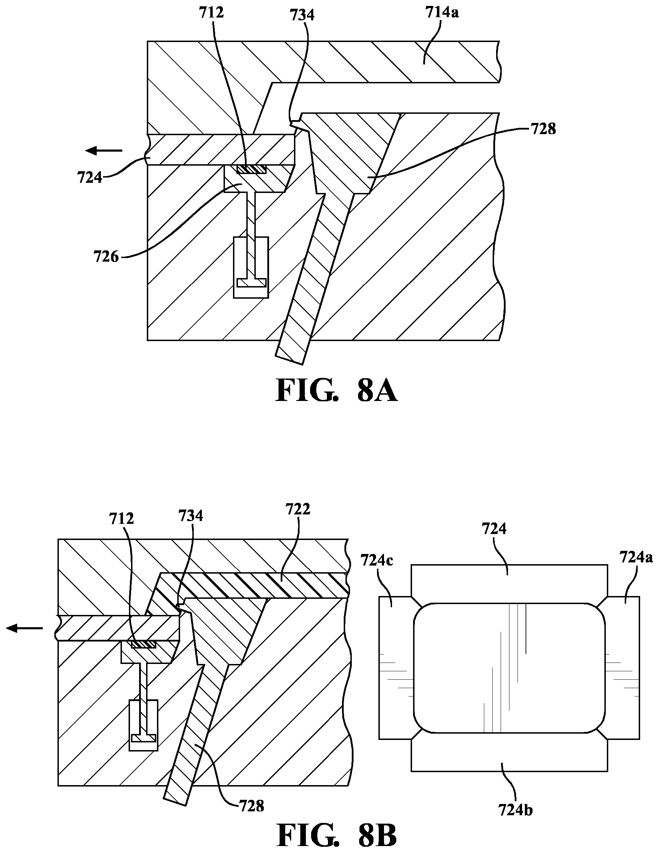

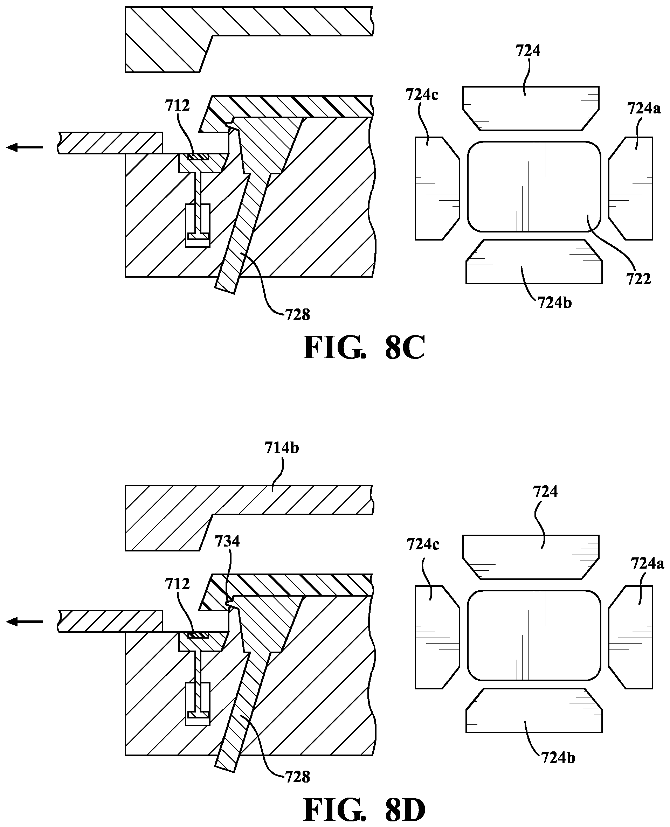

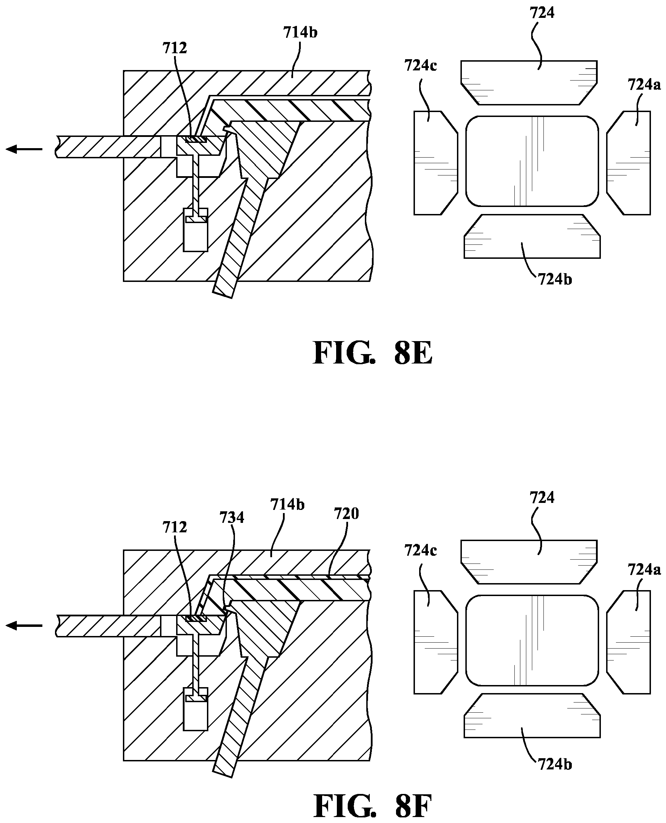

Referring now Figures 8A - 8F, wherein like numbers differing by 100 refer to like elements, this embodiment is similar to the embodiment shown in Figures 6 - 6E and 7A - 7F with an additional part lifter 728 in the bottom platen which includes an outwardly extending member 734 for engaging the part 722,

The description of the invention is merely exemplary in nature and, thus, variations that do not depart from the essence of the invention are intended to be within the scope of the invention. Such variations are not to be regarded as a departure from the spirit and scope of the invention.

Clause 1: A process for edge sealing during an overmolding of a polyurethane on a substrate part comprising the steps of:
A. Providing an injection mold cavity including a first side platen forming mold and a second side mating part forming platen;
B. Molding a substrate part formed between the first side platen and the second side mating part forming platen;
C. Providing a second overmold cavity for overmolding a polyurethane or other covering over the substrate part; and
D. Providing a seal at the flashing edge of the second overmold cavity and overmolding the polyurethane or other covering over the substrate part such that there is substantially no flashing material where the seal is located.

Clause 2: The process of Clause 1, wherein the seal is attached to the lower platen at the flashing edge.

Clause 3: The process of any preceding Clauses, wherein a seal lifter in the second side mating part forming platen is used to present the seal at the flashing area during polyurethane molding.

Clause 4: The process of any preceding Clauses, wherein an outwardly sliding core slider is interposed between the seal lifter and the first side platen during molding of the substrate part and slide out of the way for raising the seal for the step of polyurethane overmolding.

Clause 5: The process of any preceding Clauses, wherein the second side mating part forming platen has a moveable portion which includes a seal which is moveable into position at the flashing area during overmolding of the polyurethane layer onto the substrate part.

Clause 6: The process of any preceding Clauses, wherein the seal is stowed in a mating cavity in the first platen when molding the substrate part and is slidable to a second position for presenting the seal to the flashing area when overmolding the polyurethane layer.

Clause 7: The process of Clause 6 wherein a bracket member is used for supporting the seal shape during molding.

Clause 8: The process of any preceding Clauses wherein the substrate part includes an outer peripheral rib which extends in a direction toward the seal for engaging the seal.

Clause 9: A process for edge sealing around the edges of a part having at least two lateral sides during an overmolding of a polyurethane on a substrate part comprising the steps of:
A. Providing an injection mold cavity including a first upper platen forming mold and a second lower mating part forming platen; wherein said second lower mold platen has a corresponding two or more laterally moveable core sliders which move laterally to allow sealing member to be presented at the part lateral sides during molding of the PUR layer.
B. Molding a substrate part formed between the first upper platen and the second lower mating part forming platen;
C. Providing a second overmold cavity for overmolding a polyurethane or other covering over the substrate part; and
D. Providing a seal at the flashing edge on each of said at least two sides of the second overmold cavity and overmolding the polyurethane or other covering over the substrate part such that there is substantially no flashing material where the seal is located at each of the two sides.

Clause 10: The process of Clause 9 wherein the part has four outer peripheral side edges and core sliders are presented on each of the four sides having a seal positioning device that places a seal for preventing flashing during PUR overmolding of a layer.

Clause 11: The process of Clause 10 wherein a seal lifter is used for lifting the seal into position.

Clause 12: The process of Clause 11 wherein the seal lifter is positioned for moving upward to press against the mold.

Clause 13: The process of Clause 12 wherein a seal is formed which allows the **PUR** to wrap around an end of the substrate edge.

Clause 14: The process of Clause 13 wherein the seal includes a shape holding bracket member for reinforcement of the seal integrity during molding.

Clause 15: The process of Clause 10 wherein a seal lifter angled at less than 90 degrees to the plane of the part surface is used.

Clause 16: The process of Clause 15 wherein the seal provides a seal that wraps around the edge of the substrate part.

Clause 17: The process of Clause 10 wherein the seal is continuous.

Clause 18: The process of Clause 10 wherein the seal is provided in sections.

Clause 19: The process of Clause 15 wherein the seal includes a 2k silicon material insert which forms the final contour of the PUR layer around the edge of the substrate.

Clause 20: A process for edge sealing around the edges of a part having at least two lateral sides during an overmolding of a polyurethane on a substrate part comprising the steps of:
A. Providing an injection mold cavity including a first upper platen forming mold and a second lower mating part forming platen; wherein said second lower mold platen has a corresponding two or more laterally moveable core sliders which move laterally to allow sealing member to be presented at the part lateral sides during molding of the PUR layer.
B. Molding a substrate part formed between the first upper platen and the second lower mating part forming platen;
C. Providing a second overmold cavity for overmolding a polyurethane or other covering over the substrate part; and
D. Providing a seal at the flashing edge on each of said at least two sides of the second overmold cavity and overmolding the polyurethane or other covering over the substrate part such that there is substantially no flashing material where the seal is located at each of the two sides.

## Claims

1. A process for edge sealing during an overmolding of a polyurethane on a substrate part comprising the steps of:
A. Providing an injection mold cavity including a first side platen forming mold and a second side mating part forming platen;
B. Molding a substrate part formed between the first side platen and the second side mating part forming platen;
C. Providing a second overmold cavity for overmolding a polyurethane or other covering over the substrate part; and
D. Providing a seal at the flashing edge of the second overmold cavity and overmolding the polyurethane or other covering over the substrate part such that there is substantially no flashing material where the seal is located.

2. The process of claim 1, wherein the seal is attached to the lower platen at the flashing edge.

3. The process of claim 1, wherein a seal lifter in the second side mating part forming platen is used to present the seal at the flashing area during polyurethane molding.

4. The process of claim 1, wherein an outwardly sliding core slider is interposed between the seal lifter and the first side platen during molding of the substrate part and slide out of the way for raising the seal for the step of polyurethane overmolding.

5. The process of claim 1, wherein the second side mating part forming platen has a moveable portion which includes a seal which is moveable into position at the flashing area during overmolding of the polyurethane layer onto the substrate part.

6. The process of claim 4, wherein the seal is stowed in a mating cavity in the first platen when molding the substrate part and is slidable to a second position for presenting the seal to the flashing area when overmolding the polyurethane layer.

7. The process of claim 6 wherein a bracket member is used for supporting the seal shape during molding.

8. The process of claim 1 wherein the substrate part includes an outer peripheral rib which extends in a direction toward the seal for engaging the seal.

9. A process for edge sealing around the edges of a part having at least two lateral sides during an overmolding of a polyurethane on a substrate part comprising the steps of:
A. Providing an injection mold cavity including a first upper platen forming mold and a second lower mating part forming platen; wherein said second lower mold platen has a corresponding two or more laterally moveable core sliders which move laterally to allow sealing member to be presented at the part lateral sides during molding of the PUR layer.
B. Molding a substrate part formed between the first upper platen and the second lower mating part forming platen;
C. Providing a second overmold cavity for overmolding a polyurethane or other covering over the substrate part; and
D. Providing a seal at the flashing edge on each of said at least two sides of the second overmold cavity and overmolding the polyurethane or other covering over the substrate part such that there is substantially no flashing material where the seal is located at each of the two sides.

10. The process of claim 9 wherein the part has four outer peripheral side edges and core sliders are presented on each of the four sides having a seal positioning device that places a seal for preventing flashing during PUR overmolding of a layer.

11. The process of claim 10 wherein a seal lifter is used for lifting the seal into position; preferably wherein the seal lifter is positioned for moving upward to press against the mold; preferably wherein a seal is formed which allows the PUR to wrap around an end of the substrate edge .

12. The process of claim 11 wherein the seal includes a shape holding bracket member for reinforcement of the seal integrity during molding.

13. The process of claim 10 wherein a seal lifter angled at less than 90 degrees to the plane of the part surface is used, preferably
wherein the seal includes a 2k silicon material insert which forms the final contour of the PUR layer around the edge of the substrate; and/or
wherein the seal provides a seal that wraps around the edge of the substrate part.

14. The process of claim 10 wherein the seal is continuous; or wherein the seal is provided in sections.

15. A process for edge sealing around the edges of a part having at least two lateral sides during an overmolding of a polyurethane on a substrate part comprising the steps of:
A. Providing an injection mold cavity including a first upper platen forming mold and a second lower mating part forming platen; wherein said second lower mold platen has a corresponding two or more laterally moveable core sliders which move laterally to allow sealing member to be presented at the part lateral sides during molding of the PUR layer.
B. Molding a substrate part formed between the first upper platen and the second lower mating part forming platen;
C. Providing a second overmold cavity for overmolding a polyurethane or other covering over the substrate part; and
D. Providing a seal at the flashing edge on each of said at least two sides of the second overmold cavity and overmolding the polyurethane or other covering over the substrate part such that there is substantially no flashing material where the seal is located at each of the two sides.
